# EUROPEAN PATENT SPECIFICATION

(11) **EP 0 516 213 B1**
(45) Date of publication and mention of the grant of the patent: **10.01.1996**
(21) Application number: 92201377.6
(22) Date of filing: 14.05.1992
(51) Int. Cl.: F16L 27/08

(54) **Elbow joint constituted by a pair of hinged arms in a single piece with corresponding clamping collars**
Ellbogengelenkverbindung mit einem einstückigen Gelenkarmpaar mit entsprechenden Spannschellen
Joint articulé comportant une paire de bras articulés et des colliers de serrage correspondants en une seule pièce

(30) Priority: 30.05.1991 IT TO910125 U
(43) Date of publication of application: 02.12.1992
(73) Proprietor: CORAL S.p.A., I-10040 Leini (Torino) (IT)
(72) Inventor: Coral, Nevio, I-10040 Leini' (Torino) (IT)
(74) Representative: de Blasio, Francesco, Dipl.-Ing.

(56) References cited:
- FR-A- 2 517 408
- GB-A- 592 915
- GB-A- 1 511 408
- US-A- 2 936 185

## Description

The Applicant company, CORAL S.p.A., is the owner of Italian patents No. 1,103,016, No. 1,058,789 and No. 1,172,875 which have as their subject matter devices for localised suction provided with a suction point positioned terminally on a tubular duct which can anyway be orientated in a defined space. Such devices - used for sucking up polluting fumes, vapours and/or dust originating from various working phases, comprise a duct made up of rigid tubular sections alternated with flexible sections. One end of said duct is connected to an intake electro-blowing fan which discharges into a suitable chimney; the opposite end is provided with a hinged hood which can be positioned on the polluting source. Structurally, in such devices, the opposite ends of rigid tubular sections are fitted into the opposite ends of short flexible tubular portions. An elbow joint is mounted in correspondence with each flexible section, said elbow joint being provided with two clamping collars which block the ends of the flexible tubular portions onto the jacket of the facing ends of the rigid tubular sections.

At present, two applied arms are fixed to each of the two collars of each joint (cf GB-A-1 511 408). The ends of the two pairs of arms are mutually hinged so as to constitute elbow joints mounted in correspondence with the flexible tubular sections or portions, in order to allow for various angular movements of the device.

The flexible tubular portions are contained within the space to be found between the pairs of arms of the corresponding joint.

The construction of each joint therefore requires the fitting of two collars, the separate fitting of four arms, two for each collar, and the application of the pairs of arms, in juxtaposed radial positions with respect to each collar, this latter operation generally being carried out by welding so as to guarantee a solid connection between the arms and the collar. Furthermore, a high degree of precision is required for the construction and assembly of the parts so as to permit the interchangeability of the joints or of parts of same. The construction of such joints requires an operating cycle which comprises various working phases with the relative costs deriving from the preparation and assembly of SIX component parts for each joint.

The purpose of the invention is to provide complete elbow joints of the type described above, comprising, as a whole, TWO or FOUR parts the shape and size of which are perfectly identical. The invention is characterised by the claims and it is proposed to resolve the technical problem of providing perfectly identical joints, whose parts are obtained from flat plates in any suitable material, preferibly suitably sized metal plates, achieving at the same time the precise shape and size of the parts with a considerable reduction in production costs.

The invention is described below in detail with reference to the drawings, on a variable scale, which illustrate one embodiment.
- Figure 1 is a top view of one of the two parts constituting the joint;
- Figure 2 is an axonometric view of the same part bent into ring form;
- Figure 3, on a different scale, illustrates a joint constituted by a pair of the parts illustrated in Figure 2, mounted in working position;
- Figure 4 is an axonometric view of a variant of the structure of the collar of the joint illustrated in figure 3;
- Figure 5 illustrates the joint according to Figure 4 mounted in working position.

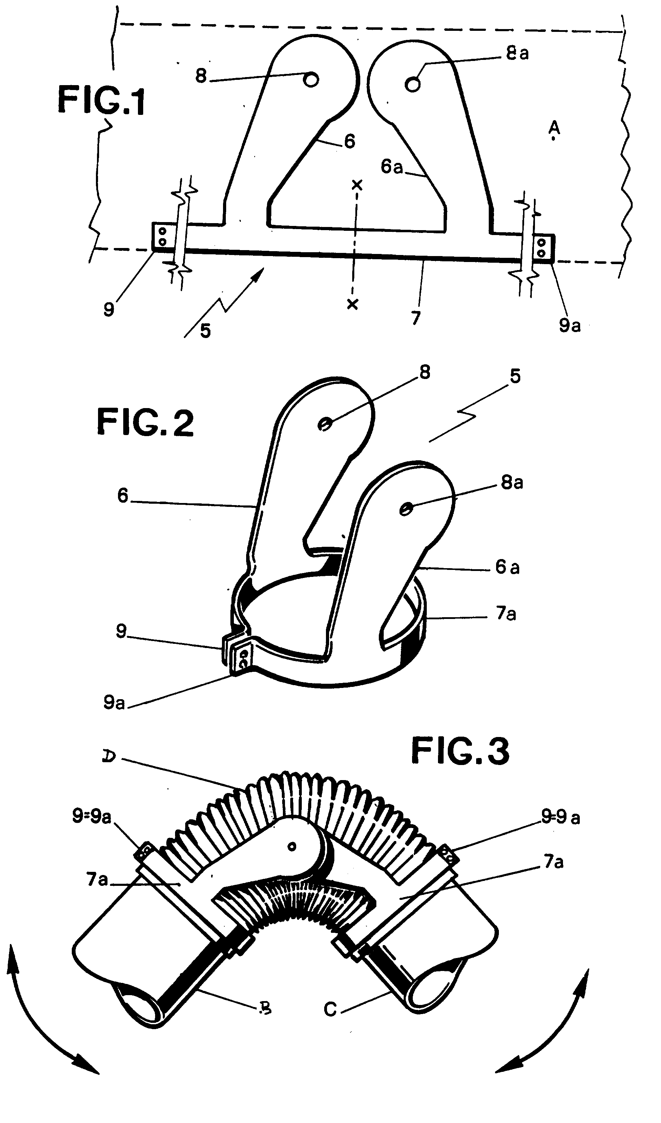

With reference to Figure 1 to 3, the part 5 is obtained from a plate -A-, Figure 1, by means of any suitable process, preferably by means of shearing. This part comprises a pair of arms 6, 6a, in a single piece with the basic strap 7 being long enough to comprise the tongues 9, 9a or, at least, according to the clamping means programmed for the collar 7a, shaped for curving the strap 7, Figure 2.

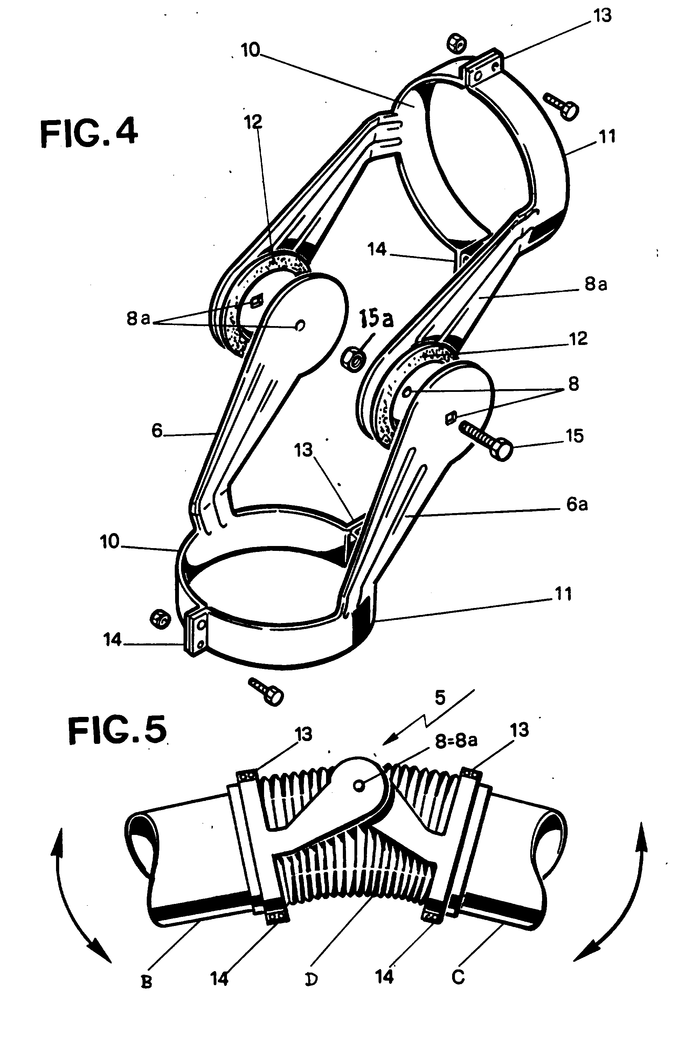

A pair of parts identical to those in Figure 2, mutually hinged in 8, 8a, with the interposition of adjustable friction means 12, Figure 4, constitute elbow joints in two parts. The corresponding collars 7a block the opposite end edges of a flexible tubular section -D-, fitted to the facing end edges of rigid tubular sections -C, B- which are part of the suction device mentioned above or of any other hermetic and orientatable piping.

In correspondence with the hinging seats 8, 8a preferably during the shearing of the parts 5, annular formed seats are obtained suitable for containing the friction means 12, Figure 4.

The tongues 9, 9a, for clamping each collar, are specific to the patent in that they can be replaced by other means suitable for the purpose.

In the variant illustrated in Figures 4 and 5 each arm 6, 6a is fixed to a semi-collar 11, 11a provided with end tongues which, together with the tongues on the opposite semi-collar, constitute mutual fixing and clamping points 13, 14, Figure 5. The shearing process for obtaining the arms 6, 6a and corresponding semi-collars in a single piece is no different from the process used for obtaining the whole collar together with the two arms. In fact it is sufficient that, in the operation phase, the necessary length for the subsequent constitution of a pair of tongues for each semi-collar 11, 11a is added to the length of the median part of the strap 7, by making the transverse cut of the base strap itself in correspondence with a prefixed median line X-X, Figure 1.

In Figure 4, as an example, 15, 15a indicates one of a pair of nuts and relative bolt, which can be replaced with any other adjustable clamping means, so as to constitute an axis of articulation Y-Y, as friction means 12 for the pairs of arms 6, 6a.

As stated, the use of the elbow joint according to the invention, is not limited to the construction of localised suction devices, although it is particularly suitable for this purpose.

## Claims

1. Elbow joint for orientatable hermetic piping comprising rigid tubular sections (C,B) alternating with joint tubular sections (D) for fluids, said elbow joint comprising two hingedly connected parts (5) each having a collar (7a) for clamping a rigid tubular section (C,B) and a pair of arms (6,6a) fixed to said collar (7a),
characterised in that each collar (7a) and the corresponding pair of arms (6,6a) are formed in a single piece from a flat plate (A) of suitable material, the collar (7a) being formed by bending a flat and coplanar base strap (7) connecting both arms into a ring form.

2. Elbow joint for orientatable hermetic piping comprising rigid tubular sections (C,B) alternating with flexible tubular sections (D) for fluids, said elbow joint comprising two hingedly connected parts (5) each having a collar (11,11a) for clamping a rigid tubular section (C,B) and a pair of arms (6,6a) fixed to said collar (11,11a),
characterised in that each collar comprises two semi--collars (11,11a) having a corresponding one of said arms (6,6a) fixed thereto, each semi-collar (11,11a) and the corresponding one of said arms (6,6a) being formed in a single piece from a flat plate (A) of suitable material, the semi-collar (11,11a) being formed by bending a flat and coplanar base strap (7) connected to the corresponding one of said arms (6,6a) into half-ring form.

3. Elbow joint according to Claim 1, which can be inserted between two, one after the other, rigid tubular sections that form part of localised suction devices,
characterised by the fact that each flexible tubular section (D) is contained within the space between the arms of the joint itself.

4. Elbow joint according to Claim 1,
characterisedby the fact that between the articulated ends of opposite arms, adjustable friction means (12) are inserted.

## Patentansprüche

1. Kniegelenk für verstellbare Dichtrohre, einschließlich steife Rohrsegmente (C, B), in Abwechslung mit Gelenkrohrsegmenten (D) für Flüssigkeiten, als Kniegelenk bezeichnet, bestehend aus zwei gelenkig verbundenen Teilen (5), jeder mit einem Bundring (7a) versehen, zum Festklemmen eines steifen Rohrssegments (C, B) und eines an besagtem Bundring (7a) befestigten Armepaares (6, 6a), dadurch gekennzeichnet, daß jeder Bundring (7a) und das entsprechende Armepaar (6, 6a) aus einem einzigen Teil, bestehend aus einer Flachplatte (A) in geeignetem Material, gebildet sind, wobei der Bundring (7a) durch Biegen einer flachen und anliegenden Grundleiste (7), die beide Arme ringförmig verbindet, gebildet wurde.

2. Kniegelenk für verstellbare Dichtrohre, einschließlich steife Rohrsegmente (C, B) in Abwechslung mit Schlauchsegmenten (D) für Flüssigkeiten, als Kniegelenk bezeichnet, einschließlich zwei gelenkig verbundene Teile (5), jeder mit einem Bundring (11, 11a) zum Festklemmmen eines steifen Rohrsegments (C, B) und eines Armepaares (6, 6a) an besagtem Bundring (11, 11a), dadurch gekennzeichnet, daß jeder Bundring aus zwei Halbbundringen (11, 11a) besteht, an denen jeweils einer der vorgenannten Arme (6, 6a) entsprechend befestigt ist, wobei jeder Halbbundring (11, 11a) und der entsprechende Arm (6, 6a) aus einem einzigen Teil, bestehend aus einer Flachplatte (A) in geeignetem Material, gebildet ist, und der Halbbundring (11, 11a) durch Biegen einer flachen und anliegenden Grundleiste (7) geformt wurde, die mit dem entsprechenden der Arme (6, 6a) halbkreisförmig verbunden ist.

3. Kniegelenk gemäß Patentanspruch 1, wobei eines nach dem anderen zwischen zwei steife Rohrsegmente, die Teile örtlicher Absaugvorrichtungen bilden, eingefügt werden kann, dadurch gekennzeichnet, daß jedes Schlauchsegment (D) im Innenraum zwischen den Gelenkarmen enthalten ist.

4. Kniegelenk gemäß Patentanspruch 1, dadurch gekennzeichnet, daß zwischen den Gelenkenden der gegenüberliegenden Arme einstellbare Reibeinlagen angebracht sind.

## Revendications

1. Articulation à genouillère pour tuyauteries hermétiques orientables comprenant des sections tubulaires rigides (C, B) alternées avec des sections tubulaires d'articulation (D) pour les fluides, dite articulation à genouillère comprenant deux parties (5), reliées d'une manière articulée ayant chacune un collier (7a) pour serrer une section tubulaire rigide (C, B) et une paire de bras (6, 6a), fixés au dit collier (7a), caractérisée par le fait que chaque collier (7a) et sa paire de bras (6, 6a) sont réalisés, en une unique pièce, avec une plaque plate (A), fabriquée dans une matière adéquate, le collier (7a) étant réalisé en pliant une bande de base (7) plate et coplanaire laquelle relie les deux bras sous la forme d'un anneau.

2. Articulation à genouillère pour tuyauteries hermétiques orientables comprenant des sections tubulaires rigides (C, B) alternées avec des sections tubulaires flexibles (D) pour les fluides, dite articulation à genouillère comprenant deux parties (5), reliées d'une manière articulée ayant chacune un collier (11, 11a) pour serrer une section tubulaire rigide (C, B) et une paire de bras (6, 6a), fixés au dit collier (11, 11a), caractérisée par le fait que chaque collier (11, 11a) comprend deux demi-colliers (11, 11a) ayant un correspondant des dits bras (6, 6a) fixé sur ceux-ci, chaque demi-collier (11, 11a) et le correspondant entre ces dits bras (6, 6a) étant réalisés, en une unique pièce, avec une plaque plate (A), fabriquée dans une matière adéquate, le demi-collier (11, 11a) étant réalisé en pliant une bande de base (7) plate et coplanaire, reliée au correspondant entre les dits bras (6, 6a) sous la forme d'un demi-anneau.

3. Articulation à genouillère, selon la Revendication 1 laquelle peut être insérée, l'une après l'autre, entre deux sections tubulaires rigides faisant partie de dispositifs d'aspiration localisée, caractérisée par le fait que chaque section tubulaire flexible (D) est placée à l'intérieur de l'espace entre les bras de cette même articulation.

4. Articulation à genouillère, selon la Revendication 1, caractérisée par le fait que des éléments de frottement réglables (12) sont insérés entre les extrémités articulées des bras opposés.
